Europäisches Patentamt

European Patent Office

Office européen des brevets

(11) Publication number: **0 137 046**
A1

# EUROPEAN PATENT APPLICATION

published in accordance with Art. 158(3) EPC

(21) Application number: 84900754.7

(22) Date of filing: 14.02.84

Data of the international application taken as a basis:

(86) International application number:
PCT/JP84/00043

(87) International publication number:
WO84/03245 (30.08.84 84/21)

(51) Int. Cl.⁴: **B 23 Q 35/00**

(30) Priority: 15.02.83 JP 23342/83

(43) Date of publication of application:
17.04.85 Bulletin 85/16

(84) Designated Contracting States:
DE FR GB

(71) Applicant: FANUC LTD
5-1, Asahigaoka 3-chome Hino-shi
Tokyo 191(JP)

(72) Inventor: YAMAZAKI, Etsuo
566-93, Shimo-Ongata-cho Hachioji-shi
Tokyo 192-01(JP)

(72) Inventor: MATSUURA, Hitoshi
Keiou-Yamada Manshon 1-406 412-7, Midori-cho
Hachioji-shi Tokyo 193(JP)

(74) Representative: Billington, Lawrence Emlyn et al,
HASELTINE LAKE & CO Hazlitt House 28 Southampton
Buildings Chancery Lane
London WC2A 1AT(GB)

(54) METHOD OF RESTARTING PROFILING MACHINING.

(57) A method of restarting profiling machining comprises the steps of: interrupting the profiling machining when a tool of abnormality occurs; storing the machine position (P) at the time at which the tool abnormality occurred or a start point ($C_2$) of the operating sequence as a resumption position at which the profiling machining is to be resumed, and storing profiling operational conditions at the time at which the tool abnormality occurred; automatically returning the tool to a tool-replacing position (R); automatically positioning a new tool, after tool replacement, at the resumption position (point $C_2$ or P); and resuming the profiling machining from the resumption position on the basis of the stored profiling operational conditions.

Fig. 2(A)

EP 0 137 046 A1

./...

Fig. 2(B)

-1-

## DESCRIPTION

Technical Field

This invention relates to a tracer machining restart method and, more particularly, to a tracer machining restart method through which a tool change can be performed automatically during tracing and tracer machining resumed automatically after the tool change.

Background Art

A tracer apparatus operates by causing a tracer head to trace a model, calculating velocity commands along various axes by using a deflection value sensed by the tracer head, driving motors for the corresponding axes on the basis of the velocity commands along these axes to transport a tool relative to a workpiece, causing the tracer head to trace the surface of the model, and repeating these operations to machine the workpiece into a shape identical with that of the model. Since tracer machining performed by an apparatus of this type is employed in machining molds and the like, machining time is of considerable length and, hence, a tool may develop a failure in the course of machining. Examples of such failure are tool breakage and wear which, if they occur, make it impossible to continue machining or to continue machining at high precision. In cases where tool life supervision is practiced, there are situations where a tool change command is generated when a tool has reached the end of its life during tracer machining. Thus, when a tool fails or a tool change command is generated during tracer machining, tracing is suspended, the tool change is performed, and tracing must be restarted following the tool change. Since the tool change and tracer restart processes demand operator intervention in order to be performed, machining cannot be automated. This has the disadvantage of making it impossible to achieve unattended operation, such as automatic operation at night.

Accordingly, an object of the present invention is to provide a novel tracer machining restart method through which an automatic tool change and automatic tracer machining restart can be performed during tracer machining.

Another object of the present invention is to provide a tracer machining restart method through which, when a tool fails, tracer machining is suspended at the position where the failure occurred, the tool is subsequently exchanged automatically, and tracer machining is resumed automatically after the tool change from the position at which machining was suspended.

Still another object of the present invention is to provide a tracer machining restart method through which unattended tracer machining can be achieved.

## Disclosure of the Invention

The present invention includes steps of halting tracer machining in response to occurrence of a tool failure attendant upon the end of tool life, tool breakage or the like, restoring the tool to a tool change position automatically, storing, subsequent to a tool change, a tracer machining restart position and tracer machining conditions which prevailed at the occurrence of the tool failure, returning a new tool to the restart position automatically after the change to said tool, and resuming tracer machining based on the stored machining conditions. According to the present invention, in the event that a tool develops a failure, a tool change is effected automatically and tracer machining can be resumed with the new tool from the point at which machining was suspended. It is therefore possible to perform unattended tracer machining at night, so that tracer machining can be exercised continually over a long period of time.

## Brief Description of the Drawings

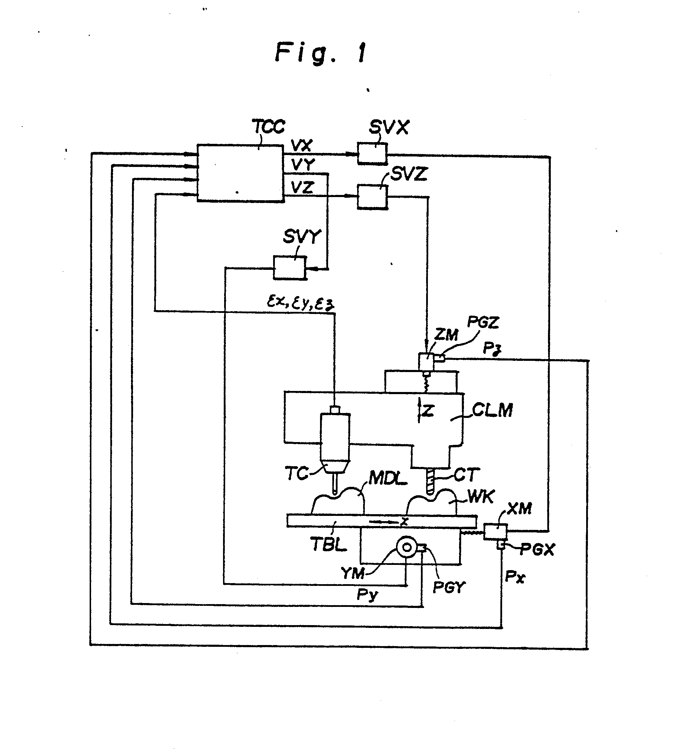

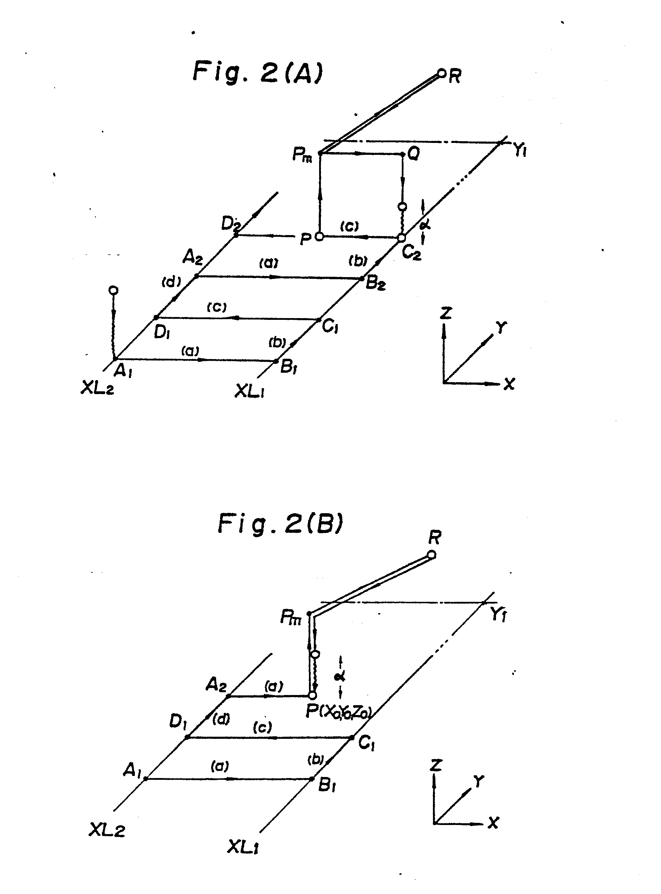

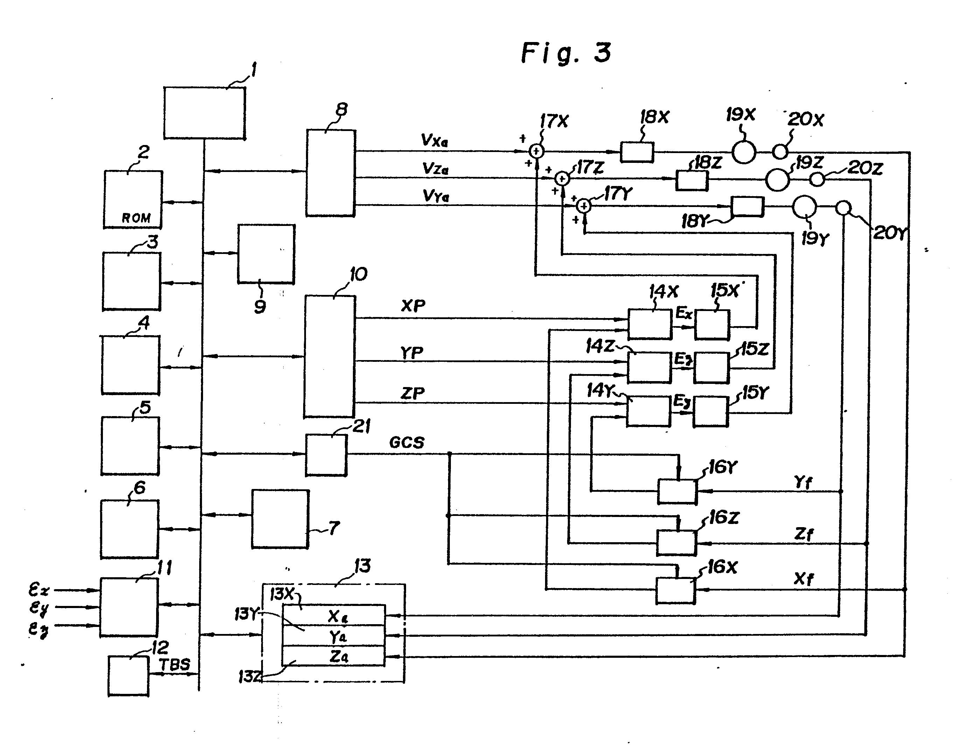

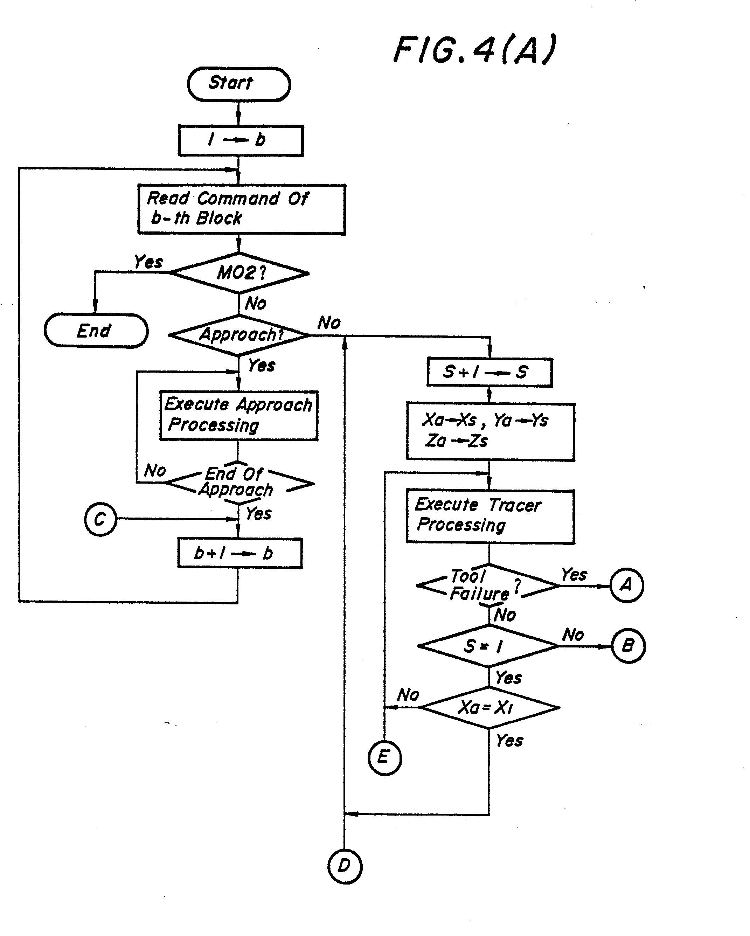

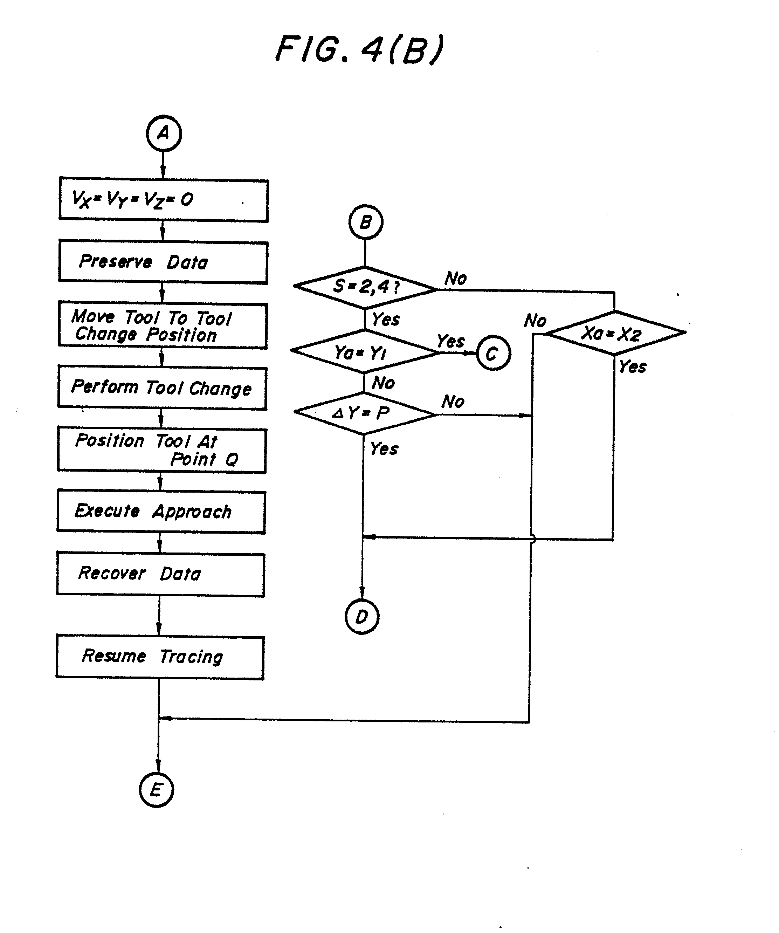

Fig. 1 is a schematic view of a tracer machine tool to which the present invention can be applied, Figs. 2(A), (B) are views for describing a tracer machining restart method according to the present invention, Fig.3 is a block diagram of an embodiment of the present invention, and Fig. 4 is a flowchart of processing according to the present invention.

## Best Mode for Carrying Out the Invention

Fig. 1 is a view showing the construction of a tracing machine tool to which the present invention can be applied. The tracing machine tool is provided with an X-axis motor XM for driving a table TBL along the X axis, a Z-axis motor ZM for driving, along the Z axis, a column CLM mounting a tracer head TC and a cutter head CT, a Y-axis motor YM for moving the table TBL along the Y axis, a pulse generator PGX for generating a single pulse $P_x$ whenever the X-axis motor XM rotates by a predetermined amount, a pulse generator PGZ for generating a single pulse $P_z$ whenever the Z-axis motor ZM rotates by a predetermined amount, and a pulse generator PGY for generating a single pulse $P_y$ whenever the Y-axis motor YM rotates by a predetermined amount. Secured to the table TBL are a model MDL and a workpiece WK. The tracer head TC contacts and traces the surface of the model MDL, and the cutter head CT cuts the workpiece WK in accordance with the shape of the model. As known in the art, the tracer head TC is arranged to sense deflection $\epsilon_x$, $\epsilon_y$, $\epsilon_z$ along the respective X, Y and Z axes of the surface of model MDL, and the deflection along the various axes sensed by the tracer head TC is applied to a tracer control unit TCC, which performs known tracing calculations to generate velocity components along respective axes. For example, as a tracing method, let us consider two-way scan tracing in the X-Z plane. Two-way tracing is performed by generating velocity components $V_x$, $V_z$, and

applying these to the X- and Y-axis motors XM, ZM via servo circuits SVX, SVZ, respectively, whereby the motors XM, ZM are driven into rotation. As a result, the cutter head CT is transported relative to the workpiece WK to cut the workpiece to the shape of the model MDL, and the tracer head TC traces the surface of the model MDL.

Pulses $P_x$, $P_y$, $P_z$ generated by the respective pulse generators PGX, PGZ, PGY are applied to present position registers for the various axes, the registers, which are not shown, being incorporated within the tracer control unit TCC. Upon receiving the pulses $P_x$, $P_y$, $P_z$ as inputs thereto, each present position register has its status counted up or counted down depending upon the direction of travel. When a present position $X_a$ along the X axis becomes equivalent to an X coordinate value $x_1$ on a first boundary line of a tracing area, the tracer control unit TCC takes the tracing plane as the Y-Z plane and generates velocity components $V_y$, $V_z$. The velocity component $V_y$ is applied to a servo circuit SVY, as a result of which the table TBL is moved along the Y axis to perform scan tracing in the Y-Z plane. When the distance traveled by the table TBL along the Y axis becomes equivalent to a preset pick-feed value P, the tracer control unit TCC subsequently takes the tracing plane as the X-Z plane and generates velocity components $V_x$, $V_z$ to perform return tracing until the present position along the X

0137046

axis comes into agreement with an X coordinate value $x_2$ on a second boundary line of a tracing area. Thereafter, pick-feed, scan tracing in one direction, pick-feed and scan tracing in the other direction are repeated to bring the present position along the Y axis to a tracing area boundary point along the Y axis. With the arrival at the boundary point, two-way scan tracing ends.

Fig. 2 is a schematic view for describing a tracer machining restart method according to the present invention. Fig. 2(A) is a view for describing how a new tool following a tool change is returned to the starting point of a tracer operating sequence when a tool fails, and how tracing is resumed from the starting point. Fig. 2(B) is a view for describing how a new tool following a tool change is returned to a machine position when a tool fails, and how tracing is resumed from that position. In two-way scan tracing in the X-Z plane (where the X axis is the feed axis and the Z axis is the tracing axis), a workpiece is cut to the shape of a model by repeating a four-step sequence after the completion of approach, the sequence steps being (a) tracing in the +X direction (referred to as one-way tracing), (b) pick feed, (c) tracing in the -X direction (referred to as return tracing), and (d) pick feed. It should be noted that data necessary for implementing the foregoing tracer machining are preset. These data include machining condition data specifying the tracing plane, tracing velocity, reference deflection value, tracing direction, pick-feed value and pick-feed direction, etc., as well as tracing area data indicative of a tracing area, such as X-axis positions $X_1$, $X_2$ of first and second boundary lines $XL_1$, $XL_2$, and a boundary position $Y_1$ along the Y axis. Tracer machining control in accordance with (a) through (d) above is carried out on the basis of these tracer machining condition data and tracing area data.

In the tracer machining restart method shown in Fig. 2(A), it is so arranged that the starting point of the aforementioned sequence is stored before executing a new sequence. Specifically, the arrangement is such that the present position of the tool or tracer head (which position shall be referred to as the "machine present position" hereafter) is monitored at all times, and such that the following steps, which serve as examples, are performed before a new tracer operating sequence begins: storing the coordinate values of points $A_1$, $A_2$ prior to the one-way tracing in (a), storing the coordinate values of points $B_1$, $B_2$ prior to the pick feed in (b), storing the coordinate values of points $C_1$, $C_2$ prior to the return tracing in (c), and storing the coordinate values of points $D_1$, $D_2$ prior to the pick feed in (d). If, say, a tool breaks (at point P) during the course of return tracing (c), as shown in Fig. 2(A), tracer machining is halted immediately, the tracer machining data and tracing area data are saved (preserved), and the tool is thenceforth positioned at a tool change point R, where a tool change is performed. When the change to the new tool is completed, the new tool is then positioned at a point Q directly above the point $C_2$, after which the tool is moved toward the point $C_2$ in a rapid-traverse (rapid approach) mode. After the tool arrives at a position which is a distance $\alpha$ from point $C_2$, there is a changeover to low-velocity feed (deceleration) to bring the tracer head into contact with the model. When the tracer head generates a deflection quantity which is greater than a predetermined value, the tool is brought into position precisely at the point $C_2$, thereby completing the approach. Lastly, the preserved data are recovered and tracing is resumed based on these data.

In the tracer machining restart method shown in Fig. 2(B), the arrangement is such as to store coordinate values $(X_0, Y_0, Z_0)$ of the maching present position P at the instant a tool failure signal or tool change command is generated. For example, if breakage of the tool is sensed (at point P) during the course of one-way tracing (a), as shown in Fig. 2(B), tracer machining is halted immediately, the machining present position P is stored, the tracer machining data and tracing area data are preserved, and the tool is thereafter positioned at the tool change point R, where a tool change is performed. When the change to the new tool is completed, the new tool is then positioned at a point $P_m$ directly above the point P, after which the tool is moved toward the point P in a rapid-traverse mode. After the tool arrives at a position which is a distance $\alpha$ from point P, there is a changeover to low-velocity feed to bring the tracer head into contact with the model. When the tracer head generates a deflection quantity which is greater than a predetermined value, the tool is brought into position precisely at the point P, thereby completing the approach. When the approach has been completed, the saved tracer machining condition data are recovered and tracing is resumed based on these data.

Fig. 3 is a block diagram of an embodiment for a case where the tracer machining restart method of Fig. 2(A) is applied to multiple step tracer machining.

In Fig.3, numeral 1 denotes a processor for executing processing in accordance with a tracer control program. Numeral 2 designates a program memory (ROM) which stores the tracer control program. A machining program memory (RAM) 3 for storing a machining program is adapted to store a tracing method, tracer machining condition data and tracing area data as a multiple step tracer machining program in the order of the process steps. A data memory 4 is for storing a plurality of machining condition data $P_{11}$, $P_{12}$..., a plurality of tracing area data $L_{11}$, $L_{12}$...., as well as other parameters. A subprogram memory 5 stores a subprogram for executing tool change processing when a failure such as tool breakage occurs. Numeral 6 denotes a working memory for storing a machine present position $(X_a, Y_a, Z_a)$, an execution sequence number s, an operating sequence starting position $(X_s, Y_s, Z_s)$, machining condition data for the present tracing step, area data, and the like. A saving memory 7 is for storing the contents of the working memory 6 when a failure such as tool breakage occurs. Numeral 8 designates a digital-analog converter (DA converter) for converting velocity data (incremental values) commanded by the processor 1 along each axis into analog velocity signals $V_x$, $V_y$, $V_z$. An operator's panel 9 is for setting machining condition data and area data and for entering commands. Numeral 10 denotes a pulse distributor, and 11 an analog-digital converter (AD converter) for converting deflection quantities $\varepsilon_x$, $\varepsilon_y$, $\varepsilon_z$ produced by the tracer head TC (Fig. 1) along the respective axes into digital values. Numeral 12 represents a tool breakage sensor. Designated at 13 is a present position monitoring unit which includes present position registers 13X, 13Y, 13Z for storing the present positions $X_a$, $Y_a$, $Z_a$ along the respective axes. Error registers 14X, 14Y, 14Z are for real-time calculation and storage of differences $E_x$, $E_y$, $E_z$ between the number of distributed pulses XP, YP, ZP generated by the pulse distributor 10, and the number of pulses $X_f$, $Y_f$, $Z_f$ generated in response to actual movement, respectively. DA converters 15X, 15Y, 15Z produce analog voltages proportional to the differences $E_x$, $E_y$, $E_z$. Numerals 16X, 16Y, 16Z denote gate circuits, 17X, 17Y, 17Z adding circuits, 18X, 18Y, 18Z X-, Y- and Z-axis servo circuits, respectively, 19X, 19Y, 19Z X-, Y- and Z-axis servomotors, respectively, and 20X, 20Y, 20Z pulse generators each for generating a single pulse $X_f$, $Y_f$, $Z_f$, respectively, each time the corresponding motor rotates through a predetermined angle.

A plurality of tracer machining condition data and tracing area data conforming to each of the tracing method are entered from the operator's panel 9 prior to tracer machining. As an example, for manual tracing, five kinds of machining condition data from $P_{11}$ to $P_{15}$, and five kinds of tracing area data from $L_{11}$ to $L_{15}$ are set. Thereafter, and in similar fashion, $P_{21}$ - $P_{25}$, $L_{21}$ - $L_{25}$ are set for two-way scan tracing, $P_{31}$ - $P_{35}$, $L_{31}$ - $L_{35}$ are set for one-way scan tracing, $P_{41}$ - $P_{45}$, $L_{41}$ - $L_{45}$ are set for $360^{\circ}$ contour tracing, $P_{51}$ - $P_{55}$, $L_{51}$ - $L_{55}$ are set for partial contour tracing, and $P_{61}$ - $P_{65}$, $L_{61}$ - $L_{65}$ are set for three-dimensional tracing. Through this operation, the tracer machining data $P_{11}$ - $P_{65}$ and tracing area data $L_{11}$ through $L_{65}$ are set in the data memory 4. Further, one item of machining condition data $P_{ij}$ is composed of the tracing plane, tracing velocity F, approach velocity $F_a$, reference deflection $\epsilon_o$, tracing direction, pick feed quantity P, pick feed direction, etc. One item of tracing area data $L_{ij}$ is composed of boundary position coordinate values of the tracing region along the respective axes.

Next, when operation is started by manipulation of a button on the operator's panel 9, the processor 1 reads, one block at a time, the machining program already stored in the machining program memory 3 and performs multiple step tracer machining control. It should be noted that the tracer machining program has the following constitution, which serves as one example:

$$
\begin{aligned}
&\text{G901} \quad Z - 0 \quad P_{31} \quad L_{32} \; ; \qquad \ldots\ldots \quad \text{(A)} \\
&\text{G903} \quad P_{34} \quad L_{34} \; ; \qquad\qquad \ldots\ldots \quad \text{(B)} \\
&\text{G00} \quad X\ldots\ldots \quad Y\ldots\ldots \; ; \qquad \ldots\ldots \quad \text{(C)} \\
&\text{G901} \quad Z\ldots\ldots \quad P_{\square\square} \quad L_{\triangle\triangle} \; ; \quad \ldots\ldots \quad \text{(D)} \\
&\text{G904} \quad P_{43} \quad L_{45} \; ; \qquad\qquad \ldots\ldots \quad \text{(E)} \\
&\quad \ldots\ldots\ldots\ldots\ldots\ldots\ldots\ldots\ldots\ldots\ldots \\
&\text{M02} \; ; \qquad\qquad\qquad\qquad \ldots\ldots \quad \text{(F)}
\end{aligned}
$$

In the program, the block (A) is an approach command block in which the G-function instruction "G901" signifies an approach command, "Z - 0" indicates approach along the -Z axis, and "$P_{31}$", "$L_{32}$" specify feedrate and deceleration positions, respectively, during approach. The block (B) is a command block specifying tracing method, tracer machining condition data and tracing area data in a first tracer machining step, in which two-way scan tracing is designated by "G903", and in which tracer machining condition data and tracing machining area data are specified by "$P_{31}$", "$L_{32}$", respectively. Block (C) is an instruction for positioning the tracer head in a rapid-traverse mode directly above a tracer machining starting point of a second step in order to execute the tracer machining of the second step. The block (D) is an approach command in the second step, and the block (E) is a block specifying tracing method, tracer machining condition data and tracing area data in the second tracer machining step, in which 360° contour tracing is designated by "G904". The block (F) is an M-function instruction indicating the end of the program.

When operation starts, the processor 1 reads the approach command of block (A) out of the machining program memory 3, then reads the tracer machining condition data specified by "$P_{31}$" as well as the tracing area data specified by "$L_{32}$" out of the data memory 4, and stores these data in the working memory 6. Thereafter, the processor reverses the sign of the rapid-traverse approach velocity data $F_a$ contained in the machining condition data, and applies the data to the DA converter 8 as Z-axis feed velocity data $V_z$. The DA converter 8 converts the Z-axis feed velocity $V_z$ into an analog velocity signal $V_{za}$ and applies this signal to the Z-axis motor 19Z via the adding circuit 17Z. As a result, the Z-axis motor 19Z rotates to transport the column CLM (Fig. 1) along the Z axis. When the Z-axis motor 19Z rotates, the pulse generator 20 generates the pulses $Z_f$, and the present position monitoring unit 13 updates the contents of the Z-axis present position register 13Z in accordance with the travelling direction each time one of the pulses $Z_f$ is generated.

The processor 1 reads the present position $Z_a$ stored in the Z-axis present position register 13Z and monitors whether the tracer head TC has arrived at the deceleration position (the Z-axis coordinate value whereof is assumed to be $Z_d$) specified by the tracing region data "L32".

If $Z_a = Z_d$ holds, the processor 1 reverses the sign of low-velocity approach velocity data $F_{ad}$ contained in the machining condition data "$P_{31}$" and delivers the data to the DA converter 8 as feed velocity $V_z$ along the Z-axis. As a result, the tracer head is lowered toward the model MDL (Fig. 1) at a low velocity.

When the tracer head contacts the model, the deflection quantities $\varepsilon_x$, $\varepsilon_y$, $\varepsilon_z$ along the respective axes are generated, and these are converted into digital values by the AD converter 11. These are then read by the processor 1.

The processor 1 obtains a resultant deflection quantity $\varepsilon$ based on the following equation:

$$\varepsilon = \sqrt{\varepsilon_x{}^2 + \varepsilon_y{}^2 + \varepsilon_z{}^2} \tag{1}$$

and checks as to whether the resultant deflection quantity $\varepsilon$ is greater than a set level $\varepsilon_a$ contained in the machining condition data "P31".

If the relation $\varepsilon \geq \varepsilon_a$ holds, then the processor 1 regards this as indicating that the tracer head has arrived at the tracer machining starting point, establishes the condition $V_z = 0$ and halts the tracer head.

Thereafter, the processor 1 reads the two-way scan tracing command of block (B) out of the machining program memory 3, stores the command in the working memory 6, reads the tracer machining condition data and the tracing region data specified by "$P_{34}$", "$L_{34}$" contained in the command, and similarly stores these in the working memory 6.

The processor 1 thenceforth updates the sequence number S (the initial value whereof is zero), which has been stored in the working memory 6, in accordance with the following formula:

$$S + 1 \longrightarrow S \qquad\qquad (2)$$

The processor also reads the starting point coordinate values $(X_s, Y_s, Z_s)$ of the S-th sequence out of the present position monitoring unit 13 and stores these values in the working memory 6.

The processor 1 follows this by performing the operation of Eq. (1) to calculate the resultant deflection $\varepsilon$, and by calculating the difference $(= \varepsilon - \varepsilon_0)$ between the resultant deflection $\varepsilon$ and the reference deflection $\varepsilon_0$ specified the machining condition data "$P_{34}$".

The processor 1 also generates a velocity signal

-16-

$V_N$ which is proportional to the difference $\Delta \varepsilon$, and a velocity signal $V_T$ which is inversely proportional to $\Delta \varepsilon$. When $\Delta \varepsilon = 0$ holds, $V_N$ is zero and $V_T$ is the tracing velocity F specified by "$P_{34}$".

The processor 1 uses the deflection signals $\varepsilon_x$, $\varepsilon_z$ along the X and Z axes to calculate deflection direction signals $\sin\theta$, $\cos\theta$ by performing the operations given by the following equations:

$$\sin\theta = \varepsilon_x / \sqrt{\varepsilon_x^2 + \varepsilon_z^2} \qquad (3)$$
$$\cos\theta = \varepsilon_z / \sqrt{\varepsilon_x^2 + \varepsilon_z^2} \qquad (4)$$

and calculates velocity signals $V_a$, $V_b$ along the respective axes by performing the operations given by the following equations:

$$V_a = V_T \cdot \sin\theta + V_N \cdot \cos\theta \qquad (5)$$
$$V_b = -V_T \cdot \cos\theta + V_N \cdot \sin\theta \qquad (6)$$

When $V_a$, $V_b$ have been obtained from Eqs. (5), (6), the processor 1 refers to the tracing plane specified by "$P_{34}$", establishes the conditions $V_x = V_a$, $V_z = V_b$, and delivers these to the DA converter 8.

The DA converter 8 converts the X-axis and Y-axis feed velocities $V_x$, $V_z$ into analog velocity signals $V_{xa}$, $V_{za}$ and applies these signals to the X- and Z-axis servo circuits 18X, 18Z via the adding circuits 17X, 17Z, respectively. As a result, the X- and Z-axis motors 19X, 19Z rotate to transport the table TBL (Fig. 1), which carries the model MDL and the workpiece WK, along the X axis, and to transport the column CLM along the Z axis. Consequently, the tracer head TC travels along the surface of the model MDL and therefore generates new deflection quantities $\mathcal{E}_x$, $\mathcal{E}_y$, $\epsilon_z$, which are read by the processor 1. Upon reading the deflection quantities $\mathcal{E}_x$, $\mathcal{E}_y$, $\mathcal{E}_z$, the processor 1 obtains new velocity signals $V_a$, $V_b$ based on these deflection quantities by performing the operations of Eqs. (1), (3) - (6), and delivers these signals in the form $V_x = V_a$, $V_z = V_b$. Processing similar to the above is then repeated to move the tracer head along the model surface toward the first boundary line $XL_1$ [FIg. 2(A)]. The cutter head (tool) moves in the same manner as the tracer head to cut the workpiece WK into a shape identical with that of the model MDL.

Each time the pulse generator 20X generates the pulse $X_f$ owing to rotation of the X-axis motor 19X, the present position monitoring unit 13, depending upon the travelling direction, executes the operation

$$X_a \pm 1 \longrightarrow X_a \qquad\qquad (7)$$

Each time the pulse generator 20Z generates the pulse $Z_f$ owing to rotation of the Z-axis motor 19Z, the present position monitoring unit 13, depending upon the travelling direction, executes the operation

$$Z_a \pm 1 \longrightarrow Z_a \qquad\qquad (8)$$

Thus, the contents of the present position registers 13X, 13Z are updated.

In parallel with the above-described velocity processing, the processor 1 reads the present positions $X_a$, $Y_a$, $Z_a$ along the respective axes, stores these in the working memory 6 and determines whether the X-axis present position $X_a$ is equal to the coorinate value $X_1$ (which is specified by the region data "L34") of the first boundary line $XL_1$ [Fig. 2(A)]. Accordingly, one-way tracing advances until the relation $X_a=X_1$ is established. When this occurs, the processor sets $V_x$, $V_z$ to zero, sets the state of the sequence register to 2 in accordance with Eq. (2), and updates the starting point coordinate values $X_s$, $Y_s$, $Z_s$ of the s-th sequence stored in the working memory 6 by the present positions $X_a$, $Y_a$, $Z_a$ along the respective axes.

Next, the processor 1 calculates the velocity signals $V_a$, $V_b$ in accordance with the Eqs. (5), (6), takes the calculated velocity signals $V_a$, $V_b$ as velocities along the Y and Z axes ($V_y=V_a$, $V_z=V_b$), and delivers these to the DA converter 8. The DA converter 8 converts the Y-axis and Z-axis feed velocities $V_y$, $V_z$ into analog velocity signals $V_{ya}$, $V_{za}$ and applies these signals to the Y- and Z-axis servo circuits 18X, 18Z via the adding circuits 17Y, 17Z, respectively. As a result, the Y- and Z-axis motors 19Y, 19Z rotate to perform a pick feed along the model in the direction of the Y axis.

Each time the pulse generator 20Z generates the pulse $Y_f$ owing to rotation of the Y-axis motor 19Y, the present position monitoring unit 13, depending upon the travelling direction, executes the operation

$$Y_a \pm 1 \longrightarrow Y_a \qquad\qquad (9)$$

to update the status of the present position register 13Y, as well as the status of present position register 13Z in accordance with Eq. (8).

In parallel with the pick feed velocity processing, the processor 1 reads the present positions $X_a$, $Y_a$, $Z_a$ along the respective axes out of the present position registers, stores these in the working memory 6, determines whether the Y-axis present position $Y_a$ is equal to the boundary position $Y_1$ [Fig. 2(A)] of the Y-axis tracing area specified by the region data "L34", and determines whether the travelling distance $_\triangle Y$ along the Y axis coincides with the pick feed quantity P designated by the tracing machining data "$P_{34}$". If the pick feed ends without $Y_a$ becoming equal to $Y_1$ (i.e., if the condition $_\triangle Y=P$ is established), the processor sets the sequence number s stored in the working memory 6 to 3 and treats the machine present position ($X_a$, $Y_a$, $Z_a$) prevailing at the end of the pick feed as the staring point coordinate values $X_s$, $Y_s$, $Z_s$ of the third sequence.

The processor thenceforth refers to the tracer machining condition data and executes return tracer processing in the same manner as the one-way tracing. As the return tracing advances and the machining present position $X_a$ along the X axis becomes equal to the X-axis coordinate value $X_2$ [Fig. 2(A)] of the second boundary line $XL_2$ specified by the area data "L34", the processor 1 sets $V_x$, $V_z$ to zero, sets the sequence number s to 4, stores the machining present position ($X_a$, $Y_a$, $Z_a$) as the starting point coordinate values $X_s$, $Y_s$, $Z_s$ of the fourth sequence, and executes a pick feed in the manner set forth above. Thereafter, similar processing is repeated and, when the Y-axis present position $Y_a$ becomes equivalent to $Y_1$, two-way scan tracing ends. The processor 1 then reads data for subsequent multi-step tracing out of the machining program memory 3 to perform tracing processing, with the multiple step tracing processing ending when "M02" is finally read. It should be noted that the sequence number for two-way scan tracing steps through values cyclically in the manner $1 \longrightarrow 2 \longrightarrow 3 \longrightarrow 4 \longrightarrow 1 \longrightarrow 2$ ... each time a sequence ends, in which 1 indicates that one-way tracing is in progress, 2 indicates that a pick feed following one-way tracing is in progress, 3 indicates that return tracing is in progess, and 4 indicates that a pick feed following return tracing is in progress.

Let us assume that the tool breaks at the point P [Fig. 2(A)] during the above-described tracer machining operation. Such tool breakage will be sensed by the tool breakage sensor 12. Since the armature current of the spindle motor that rotates the tool will increase when the tool breaks, breakage can be sensed by monitoring the armature current. When a tool breakage signal TBS is generated, the processor 1 is interrupted, immediately establishes the conditions

$V_x=0$, $V_y=0$, $V_z=0$ to halt the tracing operation, and saves all data stored by the working memory 6 in the preservation memory 7. The working memory 6 is then used for tool change processing.

The processor 1 subsequently delivers a gate enable signal GCS via a data output unit 21 to open all gates 16X, 16Y, 16Z and then reads the subprogram for a tool change out of the subprogram memory 5 one block at a time to execute tool change processing. The subprogram has the following constitution, which serves as an example:

```
O9001 ;
G28   Z   Z_m ;
M06   T □ □ ;
G29 ;
G901   Z - 0   P_31   L_31 ;
M99 ;
```

wherein "O9001" represents a subprogram number, "G28 ZZ$_m$ ;" denotes an instruction for automatically restoring the tool to the tool change position R [Fig. 2(A)] via an intermediate point $P_m$ (a position directly above the point P and having a Z-axis coordinate value $Z_m$), "M06T □ □" is an automatic tool change instruction, "G29" is an instruction for restoring the tool to the point Q (directly above the starting point $C_2$ of the operating sequence) via the intermediate point $P_m$, "G901 Z - 0 $P_{31}$ $L_{31}$ ;" represents an approach command, and "M99" is a subprogram end instruction.

The processor 1 responds to "G28 ZZ$_m$ ;" by obtaining incremental values X$_i$ (= 0), Y$_i$ (=0), Z$_i$ (= Z$_m$-Z$_a$) along the respective axes from the machine present position P to the intermediate position P$_m$, and uses these incremental values as well as the feedrate F to find feed rate components F$_x$, F$_y$, F$_z$ along the respective axes by performing the computations indicated by the following equations:

$$F_x = X_i \cdot F / \sqrt{X_i^2 + Y_i^2 + Z_i^2} \qquad (11)$$

$$F_y = Y_i \cdot F / \sqrt{X_i^2 + Y_i^2 + Z_i^2} \qquad (12)$$

$$F_z = Z_i \cdot F / \sqrt{X_i^2 + Y_i^2 + Z_i^2} \qquad (13)$$

The processor 1 then obtains, from the following equations, travelling distances $\triangle$X, $\triangle$Y, $\triangle$Z to be traversed along the respective axes during a predetermined time interval $\triangle$T sec. (= 8 msec.).

$$\triangle X = F_x \cdot \triangle T \qquad (14)$$

$$\triangle Y = F_y \cdot \triangle T \qquad (15)$$

$$\triangle Z = F_z \cdot \triangle T \qquad (16)$$

These travelling distances $\triangle$X, $\triangle$Y, $\triangle$Z are delivered to the pulse distributor 10 regularly at the time interval $\triangle$T. On the basis of the input data ($\triangle$X, $\triangle$Y, $\triangle$Z), the pulse distributor 10 performs a pulse distribution computation simultaneously along the three axes to generate distributed pulses X$_p$, Y$_p$, Z$_p$. The distributed pulses are applied to the error registers 14X, 14Y, 14Z for the respective axes to update them by one count. It should be noted that since X$_i$ = Y$_i$ = 0

holds for movement to the intermediate point $P_m$, distributed pulses $X_p$, $Y_p$ along the X and Y axes are not generated at this time, with the only distributed pulses generated being the pulses $Z_p$ along the Z axis.

As a result, the DA converter 15Z produces an analog velocity signal which is applied to the Z-axis servo circuit 18Z through the adding circuit 17Z to rotate the Z-axis motor 19Z. When the Z-axis motor rotates, the column CLM (Fig. 1) rises. In addition, the pulse generator 20Z generates the pulses $Z_f$, so that the error register 14Z is updated by one count in the negative direction each time one of the pulses $Z_f$ is produced.

The processor 1, in accordance with the following expressions, updates the present positions $X_a$, $Y_a$, $Z_a$ along the respective axes regularly at the time interval $\Delta T$ sec, which positions have been stored in the working memory 6:

$$X_a \pm \Delta X \longrightarrow X_a \qquad (17)$$

$$Y_a \pm \Delta Y \longrightarrow Y_a \qquad (18)$$

$$Z_a \pm \Delta Z \longrightarrow Z_a \qquad (19)$$

The sign depends upon the direction of movement. Similarly, in accordance with the following formulae, the processor 1 updates remaining travelling distances $X_r$, $Y_r$, $Z_r$ (the initial values whereof are the incremental values $X_i$, $Y_i$, $Z_i$, respectively) every $\Delta T$ sec, these travelling distances having been stored in the working memory 6:

$$X_r - \Delta X \longrightarrow X_r$$
$$Y_r - \Delta Y \longrightarrow Y_r$$
$$Z_r - \Delta Z \longrightarrow Z_r$$

When the following condition is established:

$$X_r = Y_r = Z_r = 0$$

a decision is rendered to the effect that the tool has arrived at the intermediate position $P_m$, the coordinate values ($X_m$, $Y_m$, $Z_m$) of the intermediate point $P_m$ are stored, and path processing up to the intermediate point $P_m$ is terminated.

The processor 1 then obtains incremental values along the respective axes from the intermediate point $P_m$ to the tool change point R and performs path processing similar to that described above to bring the tool into position at the tool change point R. The coordinate values of the tool change point R have already been stored in the data memory 4, as known.

When positioning of the tool at the tool change point R ends, the processor 1 reads the next command "M06 T ▢ ▢" out of the subprogram memory 5 and performs an automatic tool change based on this command. It should be noted that the automatic tool change mechanism and the control sequence thereof are known from the specification of, e.g., Japanese Patent Publication (Kokoku) No. 51-48825 and, hence, are not described here.

When the tool change ends, the processor 1 reads the next command "G29" out of the subprogram memory 5 and, through path control exactly the same as that described above, positions the tool at the intermediate position $P_m$.

Next, the processor 1 uses the X and Y coordinate values $X_s$, $Y_s$ of the operating sequence starting point $C_2$, as well as the X and Y coordinate values $X_m$, $Y_m$ of the intermediate point Pn, which values have already been stored in the working memory 6, to calculate the incremental values $X_i$, $Y_i$ along the respective axes and position the tool at the point Q directly above the point $C_2$ by the above-described path processing. When positioning at the point Q ends, the processor 1 reads the approach instruction out of the subprogram memory 5 and performs approach processing just as set forth earlier. With the completion of approach, "M99 ;" is read out of the subprogram memory 5, whereupon the processor 1 restores the data, which have been preserved in the preservation memory 7, to the working memory 6.

Thereafter, the processor 1 closes the gates 16X, 16Y, 16Z via the data output unit 21 and resumes return tracer machining from the point $C_2$ by using, e.g., the machining program data, machining condition data and sequence numbers restored to the working memory 6. In this manner the tool is moved to overlap the portion from point $C_2$ to point P traversed before breakage, with tracer machining being performed afresh from point P by the new tool.

The foregoing relates to a case where tracer machining is resumed by bringing the tool into position at the starting point of an operating sequence when tool breakage occurs. However, tracing can also be resumed by bringing the new tool into position at the tool breakage point in the maner shown in Fig. 2(B).

Further, while the foregoing is an example in which the present invention is applied to a situation where a tool breaks, it should be obvious that the invention can also be applied when a tool has reached the end of its life.

## Industrial Applicability

According to the present invention, when a tool breaks in the course of a tracing operation, the tool can be changed automatically and positioned at a tracing restart point. This makes it possible to improve tracer machining efficiency and to achieve unattended tracer machining.

CLAIMS:

1.    A tracer machining restart method in a tracer apparatus having a tracer head for generating a detection signal dependent upon the shape of a model, and a tracer control unit for generating commanded velocities along respective axes based on the detection signal genreated by said tracer head, wherein motors provided for the respective axes are driven in response to said commanded velocities to cause the tracer head to trace the model and to move a tool relative to a workpiece so that the workpiece is machined in accordance with the shape of the model, said tracer machining restart method characterized by having steps of interrupting tracer machining in response to occurrence of a tool failure, preserving a restart position at which tracer machining is to be resumed as well as tracer operating conditions which prevail when the tool failure occurs, restoring the tool to a tool change position automatically, positioning a new tool following a tool change at said restart position automatically, and resuming tracer machining based on said preserved tracer operating conditions.

2.    A tracer machining restart method according to claim 1, characterized by having a step of previously creating and storing in memory an instruction for moving the tool to the tool change position, an instruction for executing a tool change at said tool change position, and an instruction for positioning the new tool at said restart position.

3. A tracer machining restart method according to claim 1, characterized in that after the tool is positioned directly above said restart position, the tool is moved together with the tracer head toward the restart position and is determined to have arrived at the restart position when a resultant tracer head deflection quantity exceeds a predetermined level.

4. A tracer machining restart method according to claim 1, characterized in that a state indicative of tool breakage and a state indicative of tool wear are each treated as indicating a tool failure.

5. A tracer machining restart method according to claim 4, characterized in that a state indicative of end of tool life is treated as indicating a tool failure.

6. A tracer machining restart method according to claim 1, characterized in that said tracing restart position is a machine position which prevails when the tool failure occurs.

7. A tracer machining restart method according to claim 1, characterized in that said tracing restart position is a starting point of an operating sequence which prevails when the tool failure occurs.

# Fig. 1

0137046

## Fig. 2(A)

## Fig. 2(B)

# Fig. 3

# FIG.4(A)

# FIG. 4(B)

0137046

# INTERNATIONAL SEARCH REPORT

International Application No PCT/JP84 00043

## I. CLASSIFICATION OF SUBJECT MATTER (if several classification symbols apply, indicate all) [3]

According to International Patent Classification (IPC) or to both National Classification and IPC

Int. Cl$^3$ B23Q 35/00

## II. FIELDS SEARCHED

Minimum Documentation Searched [4]

| Classification System | Classification Symbols |
|---|---|
| IPC | B23Q 35/00 - 35/48, B23Q 3/155, 157 |

Documentation Searched other than Minimum Documentation
to the Extent that such Documents are Included in the Fields Searched [5]

| | | |
|---|---|---|
| | Jitsuyo Shinan Koho | 1956 - 1983 |
| | Kokai Jitsuyo Shinan Koho | 1971 - 1983 |

## III. DOCUMENTS CONSIDERED TO BE RELEVANT [14]

| Category* | Citation of Document, [16] with indication, where appropriate of the relevant passages [17] | Relevant to Claim No. [18] |
|---|---|---|
| A | JP, A, 54-162285 (Makino Milling Machine Co., Ltd.), 22 December 1979 (22. 12. 79) | 1-7 |
| A | JP, A, 55-24826 (Makino Milling Machine Co., Ltd.), 22 February 1980 (22. 02. 80) | 1-7 |
| A | JP, A, 57-66843 (Makino Milling Machine Co., Ltd.), 23 April 1982 (23. 04. 82) | 1-7 |

* Special categories of cited documents [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure use exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance the claimed invention cannot be considered to involve an inventive step when the document is combined with one or more other such documents such combination being obvious to a person skilled in the art

"&" document member of the same patent family

## IV. CERTIFICATION

| Date of the Actual Completion of the International Search [2] | Date of Mailing of this International Search Report [2] |
|---|---|
| May 7, 1984 (07. 05. 84) | May 21, 1984 (21. 05. 84) |

| International Searching Authority | Signature of Authorized Officer [20] |
|---|---|
| Japanese Patent Office | |

Form PCT ISA 210 (second sheet) (October 1981)